# FASCICULE DE BREVET EUROPEEN

(11) **EP 0 235 032 B1**
(45) Date de publication et mention de la délivrance du brevet: **11.01.1995**
(21) Numéro de dépôt: 87400356.9
(22) Date de dépôt: 19.02.1987
(51) Int. Cl.: E21B 49/08, E21B 47/10, G01F 1/36, G01F 1/44, G01N 9/26

(54) **Débimètre destiné notamment aux puits d'hydrocarbures**
Durchflussmesser, insbesondere für Ölbohrlöcher
Fluid meter, especially for hydrocarbon wells

(30) Priorité: 21.02.1986 FR 8602439
(43) Date de publication de la demande: 02.09.1987
(73) Titulaire: FLOPETROL SERVICES, INC., Panama City (PA)
(72) Inventeur: Czernichow, Jean, F-92290 Chatenay Malabry (FR)
(74) Mandataire: Hagel, Francis

(56) Documents cités:
- EP-A- 0 031 744
- DE-B- 1 097 155
- GB-A- 1 174 240
- US-A- 2 042 933
- US-A- 3 408 488

## Description

L'invention concerne un dispositif de mesure du débit de fluide dans une veine de fluide verticale, notamment d'un puits d'hydrocarbures.

De manière plus spécifique, l'invention concerne un débitmètre du type qui comprend : un mandrin central creux, suspendu à un câble et doté de moyens de centrage dans la veine pour laisser un passage annulaire de fluide ; des moyens de mesure, logés au moins partiellement dans le mandrin et destinés à fournir des signaux représentatifs du débit de fluide dans la veine ; et un ensemble électronique de recueil et de traitement desdits signaux.

Des dispositifs du type précité sont connus notamment par les documents US-A-3630078 et US-A-3934467. Dans ceux-ci, qui décrivent des débitmètres à rotor hélicoïdal, les moyens de mesure comportent une hélice immergée dans la veine fluide et dont la rotation est fonction du débit. Un inconvénient de ces dispositifs est qu'ils comportent un grand nombre d'organes mécaniques mobiles, fragiles et de construction délicate. Un autre inconvénient est que l'encombrement de l'hélice rend difficile son introduction dans la veine fluide, surtout lorsqu'il faut passer par des zones de faible section : on a été conduit à proposer des hélices à pales escamotables, ce qui complique encore l'agencement du débitmètre. Enfin, l'intrusion de l'hélice dans la veine ne va pas sans créer une obstruction parfois gênante du fluide.

Le but de l'invention est de proposer un débitmètre non intrusif, et notamment sans hélice, de construction simple et comportant un minimum d'organes en mouvement.

L'invention atteint son but grâce à un débitmètre du type précité en tête de ce mémoire tel que défini dans la revendication 1
Un tel débitmètre trouve notamment sa place pour la mesure du débit dans la colonne de production d'un puits d'hydrocarbures. Il est avantageux que le mandrin comporte alors un dispositif de fixation à la vanne de fond équipant la colonne de production.

En outre, le dispositif de mesure de la densité est de préférence équipé d'un second manomètre différentiel à prises de mesure situées sur le mandrin central et par exemple du type connu par le document US-A-3 455 157 pour fournir un signal représentatif de la densité du fluide.

Le câble de suspension comporte de préférence au moins un conducteur électrique destiné à transmettre des signaux vers un appareil de traitement situé en surface, comme cela est connu par exemple par le document US-A-3934467. Il est toutefois avantageux que le mandrin creux abrite lui-même tout ou partie de l'équipement électronique de traitement de signal.

Les moyens de contraction de la veine peuvent être constitués par une dilatation locale radiale intérieure de la paroi délimitant extérieurement la veine, et en particulier de la paroi de la colonne de production.

En alternative ou concurremment à la disposition précédente, les moyens de contraction peuvent être constitués par une dilatation locale radiale extérieure du mandrin.

Ces dilatations locales peuvent être permanentes ou provisoires. En particulier, la dilatation locale du mandrin peut être obtenue par un ou des manchons d'adaptation entourant le mandrin et amovibles, permettant d'optimiser la section de passage en fonction de l'importance des débits à mesurer.

Le débimètre conforme à l'invention est facile à mettre en place et permet des mesures rapides des débits des différentes phases fluides du puits. Une fois les mesures effectuées, il peut être remonté hors du puits.

Naturellement le débitmètre conforme à l'invention permet de déterminer aussi bien le débit-volume que le débit-masse ou le débit-poids.

D'autres caractéristiques et avantages de l'invention ressortiront de la description suivante d'un mode préféré de réalisation. On se réfèrera aux dessins annexés sur lesquels :
- la figure 1 est un schéma général montrant l'emplacement privilégié du mandrin de mesure dans un puits d'hydrocarbures ;
- la figure 2 est une coupe longitudinale de la colonne de production montrant le débitmètre conforme à l'invention ;
- la figure 3 est une vue dudit débitmètre avec arrachements partiels permettant d'en voir les principaux organes internes.

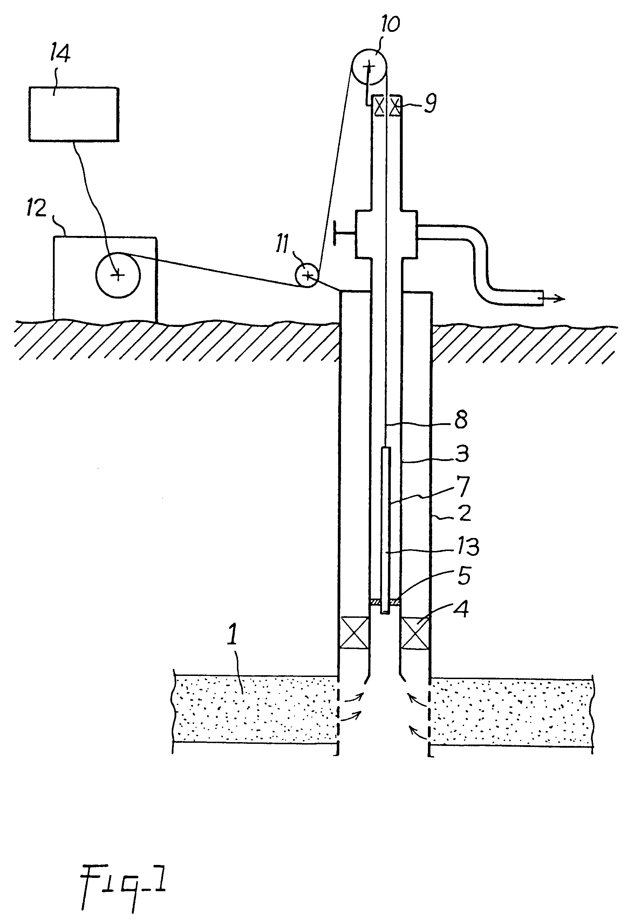

La figure 1 montre un puits creusé dans une zone 1 productrice de pétrole et comportant, dans un tubage 2, une colonne de production 3. Entre l'extrémité inférieure de cette dernière et le tubage 2 est placé un dispositif d'étanchéité annulaire 4.

Une vanne de fond, symbolisée en 5, permet d'obturer à volonté la colonne 3 près de son extrémité inférieure, grâce à des miens non représentés. Cette vanne de fond peut être, à titre d'exemple, la vanne décrite dans la demande de brevet européen No.0134734 du 12.07.1984. Un mandrin central 7 est suspendu par un câble 8 qui émerge au sommet de la colonne de production à travers un dispositif d'étanchéité 9 pour aller s'enrouler, via des poulies de renvoi 10 et 11, sur le tambour d'un treuil 12 disposé à la surface du sol.

Le mandrin central 7 est creux et abrite des dispositifs de mesure et des équipements électroniques associés. En particulier, la section inférieure 13 de mandrin surmontant la vanne de fond 5 peut abriter un manomètre auquel est transmise la pression régnant dans le puits en dessous de la vanne via des canaux traversant le mandrin à ce niveau.

Le câble 8 est un câble électrique qui, outre sa fonction mécanique de suspension et d'actionnement du mandrin, assure une fonction de transmission vers la surface des signaux de mesure tels que ceux engendrés par le manomètre logé dans la section 13. Ces signaux qui peuvent être déjà, en tout ou partie, traités ou mémorisés dans les équipements électroniques logés dans le mandrin 7, sont traités, mémorisés ou visualisés en surface au moyen du dispositif 14.

Les dispositions ci-dessus sont connues de l'homme du métier et une description plus détaillée n'est pas nécessaire.

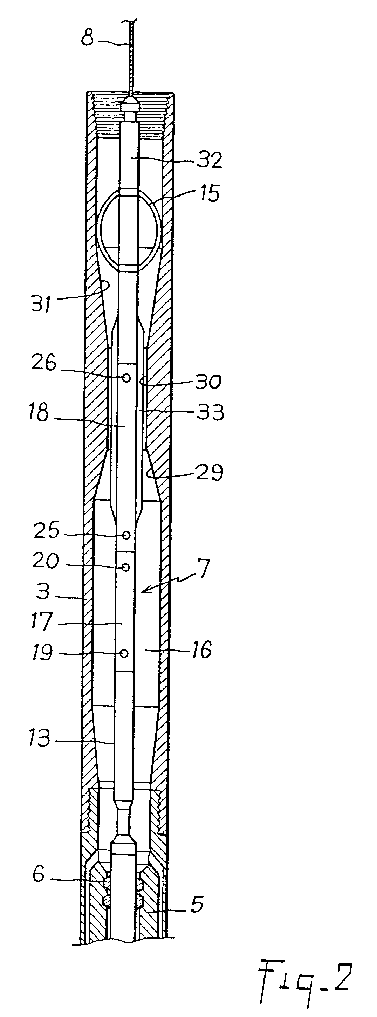

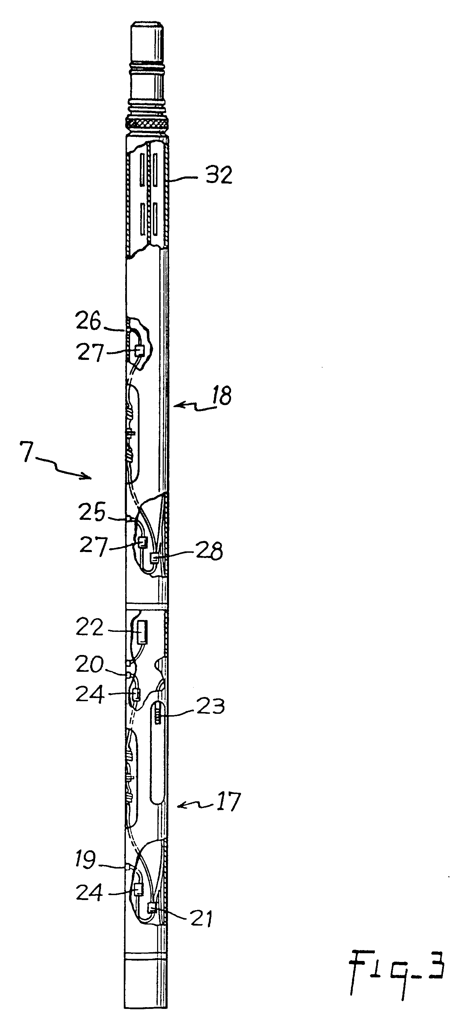

On se reportera maintenant essentiellement aux figures 2 et 3. Le mandrin 7 est ancré sur la vanne de fond 5 grâce à des moyens de blocage 6 et centré grâce à un a plusieurs centreurs 15. Un passage annulaire 16 est réservé par le fluide, entre le mandrin 7 et la colonne 3.

Le mandrin 7 comporte deux étages de mesure 17 et 1!.

L'étage 17 abrite un manomètre différentiel, qui peut avantageusement être du type décrit dans le document US-A-3455157, dont tout l'enseignement est incorporé à la présente demande par référence. Ce manomètre différentiel comprend deux points de mesure 19 et 20 longitudinalement distants dans la direction de déplacement de la veine annulaire de fluide, laquelle est ici de section constante. Des filtres 24 sont prévus pour protéger l'appareil de mesure en amont des points de mesure. La pression différentielle est essentiellement fonction de la densité du fluide. Le signal électrique fourni par un capteur 21 de pression différentielle est représentatif, en corrélation avec les signaux émanant d'un capteur de température 23 et d'un capteur de pression absolue 22, de la densité du fluide circulant dans la veine annulaire.

L'étage 18 abrite également un manomètre différentiel qui peut être en tous points semblable à celui de l'étage 17, et comprend donc deux points de mesure 25, 26 longitudinalement distants, leurs filtres de protection 27 et le capteur de pression différentielle 28. Mais à la différence de l'étage 17 qui est situé dans une zone de la veine fluide à section constante, l'étage 18 est situé dans une zone où la section de passage se contracte de manière à former un venturi annulaire. La contraction de section est obtenue par un rétrécissement tronconique 29 (considéré de bas en haut) de la paroi interne de la colonne de production 3, suivie d'un col 30 à section de passage constante, puis d'un élargissement tronconique 31. Le point de mesure amont 25 est situé dans la section non contractée tandis que le point de mesure aval 26 est situé dans la section contractée, au niveau du col du venturi. De manière connue pour les débitmètres à ajutage, le débit-masse, à certaines corrections près, est proportionnel à la racine carrée du produit de la densité du fluide et de la différence de pression entre les points de mesure. Comme la densité du fluide est déterminable à partir des signaux engendrés par le manomètre différentiel de l'étage 17, la mesure dans l'étage 18 de la différence de pression entre l'amont et la gorge du venturi permet de déterminer la valeur du débit de fluide dans la colonne de production. Cette détermination peut être faite par l'électronique intégrée au mandrin 7 et logée par exemple dans sa section supérieure 32, ou bien par l'appareillage de surface 14.

La contraction de la section est déterminée de manière à optimiser la mesure en fonction des débits attendus. De manière à pouvoir s'adapter à plusieurs débits, il est possible de prévoir autour du mandrin 7, au niveau du venturi, un manchon 33 amovible qui permet de réduire encore la section de passage au niveau du col du venturi. Ce manchon présente un orifice compatible avec le point de mesure 26.

Dans un exemple particulier de réalisation, la colonne de production 3 a un diamètre intérieur de 107mm dans la zone de l'étage 17, et le mandrin 7 a un diamètre extérieur de 43mm, laissant une section de passage de 75,4cm². Le col du venturi a un diamètre intérieur de 71mm, laissant une section contractée de 25cm². Le rapport de la section amont à la section contractée est donc de 3:1, favorable à la mesure des débits moyens à forts.

Le manchon d'adaptation 33 a un diamètre extérieur de 51mm, laissant une section contractée de 19cm², de sorte que le rapport des sections est d'environ 4:1, favorable à la mesure des débits faibles à moyens.

## Revendications

1. Dispositif de mesure du débit de fluide dans une veine de fluide notamment d'un puits d'hydrocarbures, du type qui comprend :
- un mandrin central (7) suspendu à un câble (8) et doté de moyens de centrage (15, 6) dans la veine pour laisser un passage annulaire (16),
- des moyens de mesure (18) logés au moins partiellement dans le mandrin, et destinés à fournir des signaux représentatifs du débit de fluide dans la veine,
caractérisé en ce que les moyens de mesure (18) comprennent :
- des moyens de contraction (30, 33) de la veine fluide pour former un venturi annulaire,
- un manomètre différentiel sensible aux pertes de charge occasionnées par lesdits moyens de contraction, pour engendrer un signal représentatif du débit de fluide,
- un capteur de densité (18) apte à fournir un signal représentatif de la densité du fluide.

2. Dispositif selon la revendication 1, caractérisé en ce que la veine de fluide est délimitée par la colonne (3) de production du puits.

3. Dispositif selon la revendication 2, caractérisé en ce que le mandrin (7) comporte un dispositif de fixation (6) à la vanne de fond (5) de la colonne (3) de production.

4. Dispositif selon l'une quelconque des revendications 1 à 3, caractérisé en ce que le câble de suspension (8) comporte un conducteur électrique destiné à transmettre des signaux vers un appareil de traitement de surface (14).

5. Dispositif selon l'une quelconque des rvendications 1 à 4, caractérisé en ce que les moyens de contraction de la veine sont constitués par une dilatation locale radiale intérieure (30) de la paroi délimitant extérieurement la veine.

6. Dispositif selon l'une quelconque des revendications 1 à 5, caractérisé en ce que les moyens de contraction de la veine sont constitués par une dilatation locale radiale extérieure (33) du mandrin (7).

7. Dispositif selon la revendication 6, caractérisé en ce que ladite dilatation est obtenue par un manchon d'adaptation (33) entourant le mandrin (7).

8. Dispositif selon la revendications 7, caractérisé en ce que ledit capteur de densité est un second manomètre différentiel (18).

## Claims

1. A device for measuring a fluid flow rate in a fluid stream, in particular in a hydrocarbon well, the device being of the type comprising:
a central mandrel (7) suspended from a cable (8) and provided with means (15, 6) for centering it in the stream in order to leave an annular passage (16);
measurement means (18) housed at least in part inside the mandrel and intended to provide signals representative of the rate of fluid flow in the stream;
the device being characterized in that the measurement means (18) comprise:
fluid stream contracting means (30, 33) to provide an annular venturi;
a differential pressure gauge sensitive to the head losses caused by said stream contracting means, for generating a signal representative of the fluid flow rate; and
a density measuring device (18) suitable for providing a signal representative of the density of the fluid;

2. A device according to claim 1, characterized in that the fluid stream is delimited by the production tubing (3) in the well.

3. A device according to claim 2, characterized in that the mandrel (7) includes a fixing device (6) for fixing the mandrel to the bottom valve (5) of the production tubing (3).

4. A device according to any one of claims 1 to 3, characterized in that the cable (8) from which the device is suspended includes an electrical conductor for transmitting signals to signal-processing apparatus located on the surface (14).

5. A device according to any one of claims 1 to 4, characterized in that the stream contracting means are constituted by a local internal radial expansion (30) of the wall delimiting the outside of the stream.

6. A device according to any one of claims 1 to 5, characterized in that the stream contracting means are constituted by a local outward radial expansion (33) of the mandrel (7).

7. A device according to claim 6, characterized in that said expansion is obtained by means of a matching sleeve (33) surrounding the mandrel (7).

8. A device according to claim 7, characterized in that said density measuring device is a second differential pressure gauge (18).

## Patentansprüche

1. Meßvorrichtung für den Fluiddurchsatz in einer Fluidader, insbesondere eines Kohlenwasserstoffbohrlochs der Bauart, welche umfaßt:
- einen zentralen, an einem Kabel (8) hängenden Dorn (7), versehen mit Zentriermitteln (15, 6) in der Ader unter Belassung einer ringförmigen Passage (16),
- Meßmittel (18), die mindestens teilweise in dem Dorn angeordnet sind und dazu bestimmt sind, Signale zu liefern, die repräsentativ für den Durchsatz des Fluids in der Ader sind,
dadurch gekennzeichnet, daß die Meßmittel (18) umfassen:
- Kontrahiermittel (30, 33) der Fluidader, zum Bilden einer ringförmigen Venturi-Anordnung,
- ein Differentialmanometer, das gegenüber Lastverlusten empfindlich ist, bewirkt durch die Kontrahiermittel zum Erzeugen eines Signals, das repräsentativ für den Fluiddurchsatz ist,
- einen Dichtesensor (18), der ein für die Dichte des Fluids repräsentatives Signal zu liefern in der Lage ist.

2. Vorrichtung nach Anspruch 1, dadurch gekennzeichnet, daß die Fluidader von dem Förderstrang (3) des Bohrlochs begrenzt ist.

3. Vorrichtung nach Anspruch 2, dadurch gekennzeichnet, daß der Dorn (7) eine Befestigungsvorrichtung (6) an dem Sohlenventil (6) des Förderstranges (3) umfaßt.

4. Vorrichtung nach einem der Ansprüche 1 bis 3, dadurch gekennzeichnet, daß das Aufhängekabel (8) einen elektrischen Leiter umfaßt, bestimmt zum Übertragen von Signalen zu einem übertätigen Verarbeitungsgerät (14).

5. Vorrichtung nach einem der Ansprüche 1 bis 4, dadurch gekennzeichnet, daß die Kontrahiermittel der Ader von einer lokalen radialen inneren Dilatation (30) der Wandung, die die Ader außen begrenzt, gebildet werden.

6. Vorrichtung nach einem der Ansprüche 1 bis 5, dadurch gekennzeichnet, daß die Kontrahiermittel der Ader von einer radialen lokalen Dilatation (33) außerhalb des Dornes (7) gebildet werden.

7. Vorrichtung nach Anspruch 6, dadurch gekennzeichnet, daß die Dilatation erhalten wird durch eine Anpaßhülse (33), die den Dorn (7) umgibt.

8. Vorrichtung nach Anspruch 7, dadurch gekennzeichnet, daß der Dichtesensor ein zweites Differentialmanometer (18) ist.
